# EUROPEAN PATENT APPLICATION

(11) **EP 4 687 195 A1**
(43) Date of publication of application: **04.02.2026**
(21) Application number: 24191808.5
(22) Date of filing: 30.07.2024
(51) Int. Cl.: H01M 10/653, H01M 10/658, H01M 50/116, H01M 50/143

(54) **THERMAL BARRIER SHEET**

(71) Applicant: Dätwyler Schweiz AG, 6467 Schattdorf (CH)
(72) Inventor: Yazdani, Amir, 6467 Schattdorf (CH)
(74) Representative: Prins Intellectual Property AG

(57) **Abstract**

A thermal barrier component (1, 1') for battery packs having a plurality of battery cells (2, 2'), the thermal barrier component (1, 1') comprises a sheet (3) of thermally insulating material and/or thermally resistant material; the sheet (3) comprises a first cover section (4) dimensioned to cover a first side surface of the battery cell (2, 2'), a second cover section (5) dimensioned to cover a second side surface of the battery cell (2, 2'), a first fold line (51) connecting the first cover section (4) and the second cover section (5), and a first interlocking section (6) connected by a second fold line (61) to the second cover section (5) of the sheet (3) opposite the first fold line (51), wherein the first cover section (4, 4') comprises an interlocking opening (42, 42') corresponding to the dimensions of the first interlocking section (6); wherein the sheet (3) is foldable along the first fold line (51) and the second fold line (61) such that in a folded and mounted state the sheet (3) is placed around the battery cell to cover the first side surface and the second side surface of the battery cell, and wherein the first interlocking section (6) of the thermal barrier component (1) fits into the corresponding opening (42') in the first cover section (4') of a neighbouring thermal barrier component (1') folded around a neighbouring battery cell (2').

## Description

### Technical Field

The invention relates to a thermal barrier sheet for battery packs, in particular battery packs with a plurality of prismatic or pouch battery cells.

### Technical Background

A typical automobile battery pack comprises several components. The smallest units that store and release electrical energy are the cells. They can be cylindrical, prismatic, or pouch-shaped. Multiple cells are connected in series and parallel to form a module. In a module-to-pack configuration, a battery pack consists of multiple modules. There are also other configurations, for example in which cells are directly integrated to the pack (cell-to-pack). The battery pack further comprises electrical connections such as busbars and wiring to ensure proper electrical connections between the cells, modules and the vehicle's powertrain.

Li-ion batteries with liquid organic electrolyte suffer from the risk of thermal runaway - an uncontrolled exothermic reaction caused by internal defects or external factors that can lead to intense fire and ejection of hot particles, or even explosion. Recent regulations require automobile battery packs to contain fire and hot particles in the event of thermal runaway at least for a certain time so that the passengers can safely evacuate the vehicle. Thus, there is a need to increase safety in case of a thermal runaway event.

It is known to use thermal barriers as protective layers designed to prevent or slow the spread of heat. These barriers are typically made of materials with high thermal resistance and are placed between individual battery cells within the battery pack. A separate thermal barrier sheet may be placed on top, bottom and sides of a module.

EP1939956 B1 refers to a battery pack with separators with electrical and heat insulating properties. The separators cover the outside of each battery cell excluding electrode terminals. The separators are formed in the shape of rigid open boxes.

WO20031736 describes a plurality of square battery cells stacked with an insulating material interposed therebetween to form a battery stack. The insulating material is configured of a rigid insulating case inside which the square battery cell is arranged. The insulating case includes a pair of cover cases divided in the thickness direction.

### Summary of the Invention

Objectives of the invention are to provide a thermal barrier for battery packs, which is efficient to capture particles, is easy to manufacture, is easy to apply in battery packs and/or has a good cost performance.

At least one of the objectives of the present invention is achieved by a thermal barrier component for battery packs having a plurality of battery cells, preferably with prismatic cells or pouch cells, according to claim 1.

The thermal barrier component comprises a sheet of thermally insulating material and/or thermally resistant material. The sheet comprises a first cover section dimensioned to cover a first side surface of the battery cell, a second cover section dimensioned to cover a second side surface of the battery cell, a first fold line connecting the first cover section and the second cover section, and a first interlocking section connected by a second fold line to the second cover section of the sheet opposite the first fold line. The first cover section comprises an opening corresponding to the dimensions of the first interlocking section. The sheet is foldable along the first fold line and the second fold line such that in a folded and mounted state the sheet is placed around the battery cell to cover the first surface and the second surface of the battery cell, and the first interlocking section of the thermal barrier component fits into the corresponding opening in the first cover section of a neighbouring thermal barrier component folded around a neighbouring battery cell.

The thermal barrier component is thus manufacturable as a flat and flexible sheet and is then easily mounted within a battery pack. The thermally insulating material reduces thermal conductivity of the sheet and spread of heat to surrounding cells. Thus, the thermal barrier component helps to achieve a better safety by reducing the intensity and speed of the thermal runaway event and/or by providing a longer time during which the passengers can exit the vehicle safely.

Prismatic or pouch battery cells typically have two larger side surfaces opposite each other connected by two smaller side surfaces, a top side surface and a bottom side surface. In a battery pack they are aligned in a row with the larger side surfaces facing each other. Electrical connections as well as a bursting valve (in prismatic cells) are typically arranged on the top surface. In such a setting, the first surface may be one of the large side surfaces and the second surface may be the top surface. Thus, when the thermal barrier component is placed in the battery pack, the first section of the thermal barrier component covers the large side surface in between adjacent battery cells. The second section is folded along the first fold line and covers the top side of the battery cell. Thus, each intermediate cell of a battery pack is closely covered by a first thermal barrier component on a large side surface and the top side surface, and the opposite large side surface is covered by a second thermal barrier component of an adjacent or neighbouring battery cell. Both ends of several aligned battery cells with thermal barrier components may be covered with a sheet having the first cover section or the interlocking section only.

The locking mechanism with an interlocking section of a first thermal barrier component inserted in a corresponding opening in a second neighbouring thermal barrier component allows to connect several thermal barrier components together to form a repetitive structure around the battery cells of a module. Thus, the thermal barrier components form a larger interconnected thermal barrier system with good structural stability. After packing the cells in a module, the pressure hinders the locking mechanism from unlocking.

Further embodiments of the invention are set forth in the dependent claims.

In some embodiments the sheet may be made of an elastomer matrix comprising a filler material selected from the group of thermally insulating filler material, fire-retardant filler material, thermally resistant filler material and combinations thereof.

In some embodiments the thickness of the sheet is thinner along the first fold line and/or second fold line. The sheet may have an average thickness of 1 to 4 mm. The fold lines may be approximately 20 - 50% thinner than the average thickness of the different sections of the sheet. The thinner fold lines facilitate folding the sheet around a battery cell while at the same time manufacturing the sheet in a flat non-folded configuration.

In some embodiments a surface of the sheet is at least partially provided with a protruding pattern. The protruding pattern may be parallel or crossing ribs, or bumps. The protruding pattern reduces the contact area to the surface of the battery cell resulting in reduced compression forces when battery cells in a module breath during loading and unloading cycles. Additionally, this reduced contact area reduces the heat transfer between the battery cells.

In some embodiments the thermal barrier component may comprise an intumescent coating. The intumescent coating may be applied at least partially to the surface of the sheet between the protruding patterns. In this case, it is not in contact in normal working conditions of the battery cell but can swell when exposed to heat from thermal runaway, creating additional protection. Intumescent coatings are often fragile. Applying them between the protrusions protects them from wearing off.

In some embodiments the sheet may comprise a burst valve opening for a burst valve of a battery cell. The burst valve opening may be in the second cover section, which - in the mounted state - may fold over a top side surface of the battery cells. The burst valve opening creates a passage for the gas and particles from the cell to exit.

In some embodiments the sheet comprises two slits arranged between the first cover section and the second cover section and extending on both sides of the first fold line. The slits create two free ends of the second cover section. The slits form an opening for a busbar connecting the poles of the battery cells. At the same time the free ends of the second cover section may protect the battery poles and busbar from often conductive particles which may result from a thermal runaway event. A central part of the second cover section provided with a burst valve opening may be placed close to the burst valve while also covering the poles and the busbar. Particles originating from a thermal runaway event may be efficiently evacuated through the burst valve opening without reaching the poles or the busbar.

In some embodiments the second cover section or another cover section may comprise electrode openings for connecting the electrodes of the battery cell. The electrode openings may be small slits in the cover section. In a folded configuration of the thermal barrier component, the electrodes may protrude through the electrode openings for connecting them.

In some embodiments the sheet may comprise at least one further cover section dimensioned to cover at least one further side surface of the battery cell and connected to the first cover section by at least one further fold line on a side of the first cover section perpendicular to or opposite the first fold line. One or more further cover sections may be used to cover a bottom side surface or the smaller side surfaces of the battery cells. The sheet may comprise at least one further interlocking section connected to the at least one further cover section by a fold line opposite the at least one further fold line of the least one further cover section, wherein the first cover section may comprise at least one further opening corresponding to the dimensions of the at least one further interlocking section. The above features of the first cover section, first interlocking section and first fold line apply also to the other cover sections, interlocking sections and fold lines.

The present invention also refers to a battery pack comprising a plurality of battery cells and further comprising a plurality of thermal barrier components as described above. Each of the plurality of battery cells is wrapped in one of the plurality of thermal barrier components connected to each other via the interlocking section.

The present invention further relates to a method for arranging a thermal barrier in a battery pack comprising a plurality of battery cells, the method comprising the steps of: (a.) providing a plurality of thermal barrier components as described above in the form of a flat sheet, (b.) wrapping one sheet around each battery cell by folding the sheet along the first fold line and the second fold line; (c.) placing the battery cells next to each other by inserting the interlocking section of one thermal barrier component in the corresponding opening of a neighbouring thermal barrier component.

### Brief Explanation of the Figures

The invention is described in greater detail below with reference to embodiments that are illustrated in the figures. The figures show:
- Fig. 1: a thermal barrier component in the form of a flat sheet;
- Fig. 2: the component of Fig. 1 folded around a battery cell seen from opposite sides (a) and (b);
- Fig. 3: several components of Fig. 1 folded around several battery cells seen from different sides (a) and (b), under (b) one battery cell is not shown;
- Fig. 4: a thermal barrier component in the form of a flat sheet with a further cover section;
- Fig. 5: a cross section through the sheet having a protruding pattern and an intumescent coating;
- Fig. 6: a thermal barrier component in the form of a flat sheet with further cover sections on all sides.

### Embodiments of the Invention

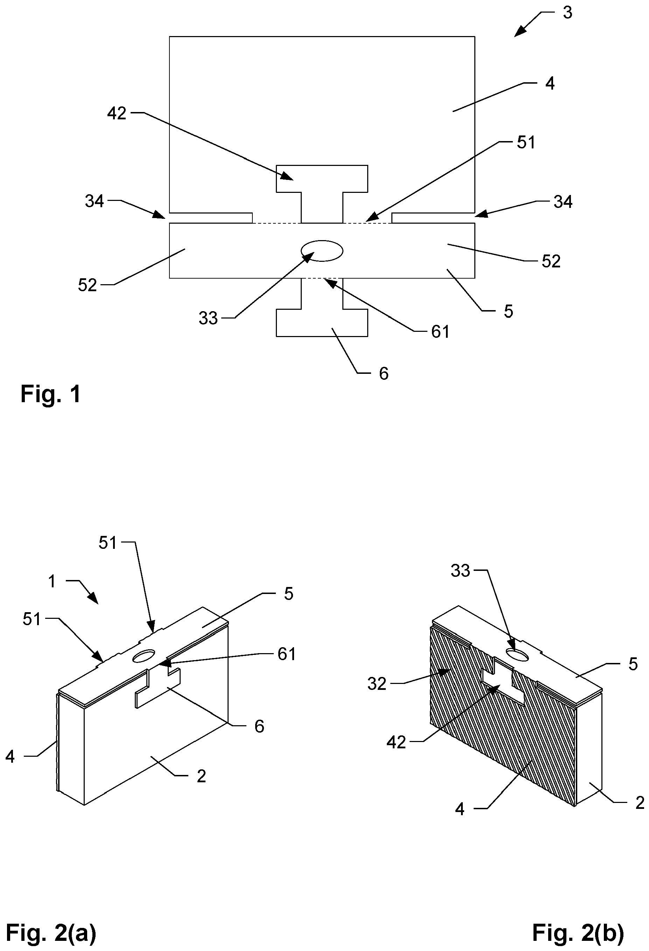

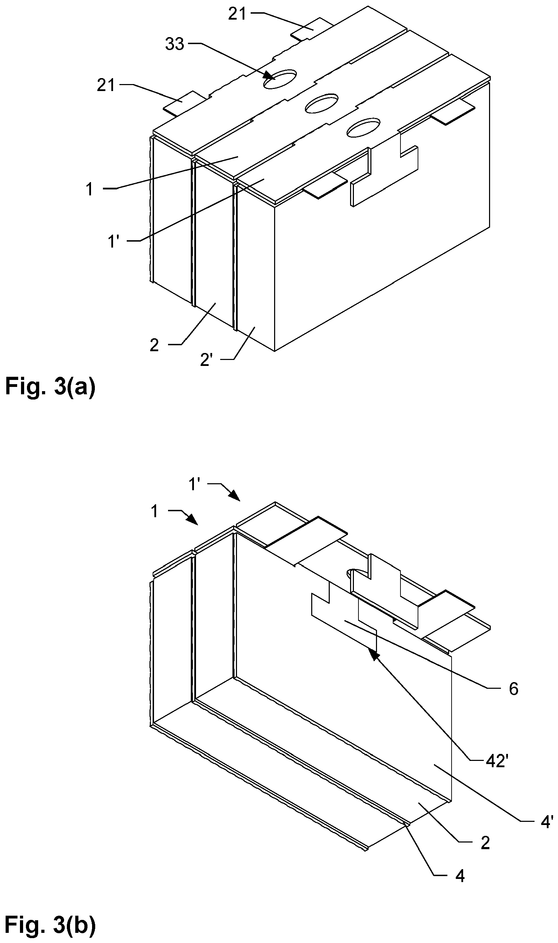

Fig. 1 shows a front view of a thermal barrier component 1, 1' in the form of a flat sheet 3 as it may be manufactured. Fig. 2 shows two perspective views (a) and (b) of the thermal barrier component of Fig. 1 folded around a battery cell 2, 2'. Fig. 3 shows two perspective views (a) and (b) of several battery cells 2, 2' wrapped in several thermal barrier components 1, 1'. Under Fig. 3(b) one of the battery cells is not shown. The battery cells may be prismatic cells or pouch cells which typically have side surfaces being approximately perpendicular to each other.

The sheet 3 comprises a first cover section 4 which is dimensioned to cover one of the large side surfaces of the battery cell 2, 2' as shown in Fig. 2(b). The sheet 3 further comprises a second cover section 5 which is dimensioned to cover a top side surface of the battery cell 2, 2' (see Fig. 2(a) and (b)). The first cover section 4 and the second cover section 5 are connected to each other by a first fold line 51 along which the sheet 3 is folded when the thermal barrier component 1, 1' is wrapped around the battery cell 2, 2'. The sheet 3 further comprises an interlocking section 6 - here having a T-shape - and a corresponding opening 42 in the first cover section 4. The interlocking section 6 is connected to the second cover section 5 with a second fold line 61 arranged opposite the first fold line 51. In the folded state of the thermal barrier component 1, 1', the interlocking section 6 lies on the other large side of the battery cell 2, 2' opposite the first cover section 4. When several battery cells 2, 2' are placed next to each other in a module, the interlocking section 6 of a first thermal barrier component 1 is inserted into the opening 42' of a second neighbouring thermal barrier component 1'.

The second cover section 5 may be provided with a burst valve opening 33, which in the mounted state is placed directly above a burst valve of the battery cell. On both sides of the first fold line 51, the sheet 3 may be provided with slits 34 to create two opposite free ends of the second cover section 5. When the thermal barrier component 1, 1' is folded around the battery cell 2, 2' a busbar 21 for connecting the battery cells 2, 2' may pass through the slits 34 (see Fig. 3).

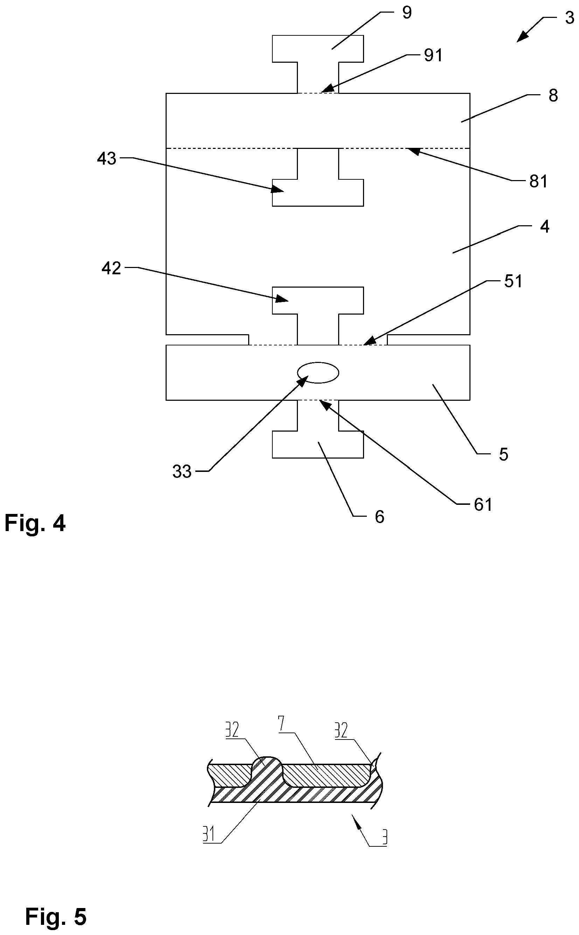

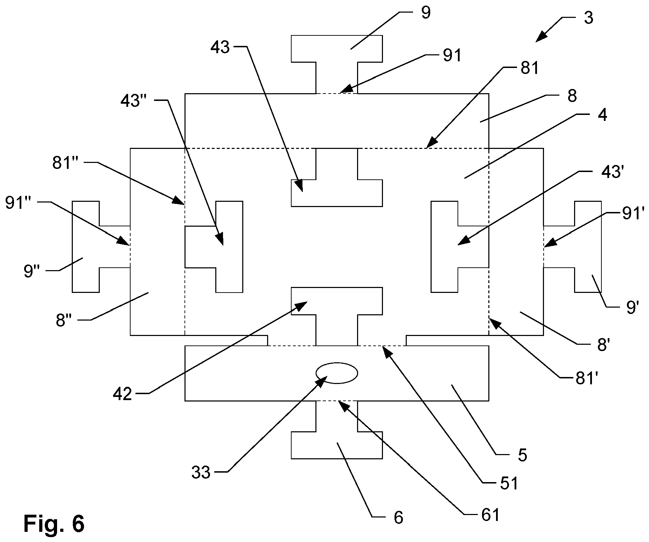

Fig. 4 shows a front view of a thermal barrier component 1 in the form of a flat sheet 3 including a further cover section (third cover section 8) connected to the first cover section 4 by a further fold line (third fold line 81). In the shown variant of the thermal barrier component 1, the third cover section 8 is connected to the first cover section opposite the second cover section 5 and in a folded configuration covers a side of the battery cell 2 opposite the side covered by the second cover section 5. A further interlocking section 9 is connected to the third cover section 8 by a fold line 91. The first cover section comprises a further opening 43 corresponding to the dimensions of the further interlocking section 9. Further cover sections may be present on the sides of the first cover section perpendicular to the second and third cover sections (see Fig. 6).

Fig. 5 shows a partial cross-section through the sheet 3 of a thermal barrier component 1 with a sheet 3 of a layer of elastomer 31 provided with a protruding pattern 32 and an intumescent coating 7 between the protrusions of the protruding pattern 32.

Fig. 6 shows a front view of a thermal barrier component 1 in the form of a flat sheet 3 including further cover sections 8, 8', 8" connected to each side of the first cover section 4 by a further fold line 81, 81', 81", i.e. the side opposite the first fold line 51 and the two sides perpendicular to the first fold line 51. Further interlocking sections 9, 9', 9" are connected to the third cover section 8, 8', 8" by fold lines 91, 91', 91". The first cover section 4 comprises further openings 43, 43', 43" corresponding to the dimensions of the further interlocking sections 91, 91', 91".

### Reference Signs

- 1, 1': thermal barrier component
- 2, 2': battery cell
- 21: busbar
- 3: sheet
- 31: elastomer
- 32: protruding pattern
- 33: burst valve opening
- 34: slit
- 4: first cover section
- 42, 42': opening
- 43, 43', 43": opening
- 5: second cover section
- 51: first fold line
- 52: free end
- 6: interlocking section
- 61: second fold line
- 7: Intumescent coating
- 8, 8', 8": third cover section
- 81, 81', 81": third fold line
- 9, 9', 9": interlocking section
- 91, 91', 91": fold line

## Claims

1. Thermal barrier component (1, 1') for battery packs having a plurality of battery cells (2, 2'), the thermal barrier component (1, 1') comprises a sheet (3) of thermally insulating material and/or thermally resistant material;
the sheet (3) comprises
a first cover section (4) dimensioned to cover a first side surface of the battery cell (2, 2'),
a second cover section (5) dimensioned to cover a second side surface of the battery cell (2, 2'),
a first fold line (51) connecting the first cover section (4) and the second cover section (5), and
a first interlocking section (6) connected by a second fold line (61) to the second cover section (5) of the sheet (3) opposite the first fold line (51),
wherein the first cover section (4, 4') comprises an interlocking opening (42, 42') corresponding to the dimensions of the first interlocking section (6);
wherein the sheet (3) is foldable along the first fold line (51) and the second fold line (61) such that in a folded and mounted state the sheet (3) is placed around the battery cell to cover the first side surface and the second side surface of the battery cell, and
wherein the first interlocking section (6) of the thermal barrier component (1) fits into the corresponding opening (42') in the first cover section (4') of a neighbouring thermal barrier component (1') folded around a neighbouring battery cell (2').

2. Thermal barrier component according to claim 1, wherein the sheet (3) is made of an elastomer matrix comprising a filler material selected from the group of thermally insulating filler material, fire-retardant filler material, thermally resistant filler material and combinations thereof.

3. Thermal barrier component according to one of the preceding claims, wherein the thickness of the sheet (3) is thinner along the first fold line (51) and/or second fold line (61).

4. Thermal barrier component according to one of the preceding claims, wherein a surface of the sheet (3) is at least partially provided with a protruding pattern (32).

5. Thermal barrier component according to one of the preceding claims, wherein the thermal barrier component comprises an intumescent coating (7).

6. Thermal barrier component according to claim 4 and 5, wherein the intumescent coating (7) is applied at least partially to the surface of the sheet between the protruding patterns (32).

7. Thermal barrier component according to one of the preceding claims, wherein the sheet comprises a burst valve opening (33) for a burst valve of a battery cell (2, 2').

8. Thermal barrier component according to one of the preceding claims, wherein the sheet (3) comprises two slits (34) arranged between the first cover section (4) and the second cover section (5) and extending on both sides of the first fold line (51).

9. Thermal barrier component according to one of the preceding claims, wherein the sheet comprises at least one further cover section (8, 8', 8") dimensioned to cover at least one further side surface of the battery cell (2, 2') and connected to the first cover section (4) by at least one further fold line (81, 81', 81") on a side of the first cover section (4) perpendicular to or opposite the first fold line (51).

10. Thermal barrier component according to claim 9, wherein the sheet (3) comprises at least one further interlocking section (9, 9', 9") connected to the at least one further cover section (8, 8', 8") by a fold line (91, 91', 91") opposite the at least one further fold line (81, 81', 81") of the least one further cover section (8, 8', 8"), and wherein the first cover section (4) comprises at least one further opening (43, 43', 43") corresponding to the dimensions of the at least one further interlocking section (9, 9', 9").

11. Battery pack comprising a plurality of battery cells (2, 2') and further comprising a plurality of thermal barrier components (1, 1') according to one of the preceding claims, wherein each of the plurality of battery cells (2, 2') is wrapped in one of the plurality of thermal barrier components (1, 1') connected to each other via the interlocking section (6, 6').

12. Method for arranging a thermal barrier in a battery pack comprising a plurality of battery cells (2, 2'), the method comprising the steps of:
a. providing a plurality of thermal barrier components (1, 1') according to one of the claims 1 to 10 in the form of a sheet (3),
b. wrapping one sheet (3) around each battery cell (2, 2') by folding the sheet (3) along the first fold line (51) and the second fold line (61),
c. placing the battery cells (2, 2') next to each other by inserting the interlocking section (6) of one thermal barrier component (1) in the corresponding opening (42') of a neighbouring thermal barrier component (2').
